Europäisches Patentamt

European Patent Office

Office européen des brevets

(19)

(11) Numéro de publication: **0 321 371**

**A2**

(12) **DEMANDE DE BREVET EUROPEEN**

(21) Numéro de dépôt: **88420423.1**

(22) Date de dépôt: **16.12.88**

(51) Int. Cl.⁴: **G 06 F 15/02**

(30) Priorité: **18.12.87 FR 8718116**

(43) Date de publication de la demande:
**21.06.89 Bulletin 89/25**

(84) Etats contractants désignés:
**BE CH DE ES FR GB IT LI LU**

(71) Demandeur: **INFORMATIQUE ET REALITE**
**Rue de la Foret**
**F-67550 Vendenheim (FR)**

**SOCIETE DE DIFFUSION VIDEOTEX PLURIMEDIA**
**15 rue de la Nuée Bleue**
**F-67000 Strasbourg (FR)**

Schott, Michel
Rue de la Forêt
F-67550 Vendenheim (FR)

Landaret, Michel
38 sentier de l'Aubépine
F-67000 Strasbourg (FR)

(72) Inventeur: **Schott, Michel**
rue de la Forêt
F-67550 Vendenheim (FR)

**Landaret, Michel**
38 Rue Sentier de l'Aubépine
F-67000 Strasbourg (FR)

(74) Mandataire: **Laurent, Michel et al**
**Cabinet LAURENT et GUERRE B.P. 32**
**F-69131 Ecully Cedex (FR)**

(54) **Dispositif autonome portable de stockage, de transfert et de controle d'informations.**

(57) Dispositif autonome portable de stockage, de transfert et de contrôle d'informations, comprenant un support (7) apte à recevoir des composants électroniques, intégrant notamment une mémoire morte de type ROM (3), un microprocesseur (6) apte à gérer le fonctionnement du dispositif, ainsi que des mémoires dont la ROM (3) et des moyens de connexion (9) du support sur l'appareil auquel il se raccorde **caractérisé** en ce que le dispositif comporte une source d'énergie électrique intégrée (1), une horloge du type à quartz (5), activée par ladite source électrique, et destinée outre à fournir des données horaires, à horodater les différentes informations transitant par le microprocesseur (6), une mémoire vive de type RAM (2), alimentée par ladite source d'énergie électrique (1), un interface (5) destiné à permettre le transit des informations entre le microprocesseur et les moyens de connexions et en ce que le circuit électronique formé par le microprocesseur (6), les mémoires (2,3) et les interfaces (5,11) sont du type monolithique intégré.

FIG. 1

EP 0 321 371 A2

## Description

## DISPOSITIF AUTONOME PORTABLE DE STOCKAGE, DE TRANSFERT ET DE CONTROLE D'INFORMATIONS.

La présente invention concerne un dispositif autonome et portable, apte à traiter et à mémoriser une pluralité d'informations.

Elle concerne plus particulièrement un dispositif de contrôle, d'identification et d'authentification, de paiement et de pré-paiement, de cryptage et de décryptage.

On connaît à ce jour différents dispositifs qui visent à remplir certaines de ces fonctions, notamment la carte à mémoire munie de son lecteur. Cette dernière bien connue aujourd'hui, présente de notables inconvénients, parmi lesquels on peut citer :

- un prix de revient élevé ; en effet, si le prix de revient de la carte est tout à fait raisonnable, celle-ci ne peut fonctionner sans un lecteur qui lui est relativement onéreux. Ce prix limite voire interdit un développement grand public d'un tel système et en restreint donc largement la diffusion aux applications professionnelles pour lesquelles le lecteur n'est diffusé qu'en quantité restreinte (par exemple cabines téléphoniques, guichets bancaires,...) ;

- le système formé par la carte et le lecteur n'est pas portable, seule la carte l'est en réalité ; le lecteur plus volumineux est fixe et nécessite une alimentation, généralement sur secteur, et ce en permanence ;

- la carte n'est pas alimentée électriquement, donc ne peut pas fonctionner lorsqu elle n'est pas connectée sur le lecteur ; on limite ainsi de façon notable les possibilités de la carte portative ainsi que les garanties de sécurité et de confidentialité.

La carte utilisée d'une manière indépendante ne remplit qu'un simple rôle d'identification, et ne peut en aucun cas jouer un rôle actif sans être connectée à un lecteur.

On a montré dans les documents FR-A-2 311 360 et FR-A-2 311 365 des systèmes du type en question, faisant appel à l'intégration au sein d'une entité portable d'un microprocesseur, qui réagit en fonction d'un programme qui y a été masqué au préalable. Les fonctions essentielles de ce microprocesseur sont de trois types :

- la gestion du protocole de dialogue avec le centre serveur et l'usager ;

- le contrôle d'accès à la mémoire de données ;

- la mise en oeuvre d'un algorithme de sécurité à des fins d'authentification de signature et de gestion des clefs.

La mémoire de données entrant en jeu contient trois types d'informations, respectivement :

- des informations libres, accessibles de l'extérieur sans formalités particulières ;

- des informations confidentielles, lisibles seulement après présentation d'un code et ne circulant pas sans certificat à l'extérieur ;

- des informations secrètes, uniquement accessibles au microprocesseur, qui en interdit toute diffusion à l'extérieur ; ce sont les clefs secrètes et le code porteur.

Toutefois, comme déjà dit, ces systèmes, qui se présentent principalement sous la forme de carte, format carte de visite, ne peuvent fonctionner de façon autonome et sont nécessairement "connecter" à un centre serveur, par exemple par l'intermédiaire d'un lecteur.

De plus, il s'est avéré que la confidentialité offerte par ce type de système n'était pas toujours suffisante, et de fait nécessite d'être augmentée pour devenir radicalement inviolable.

La présente invention vise à pallier ces inconvénients. Elle propose un dispositif qui soit économique à réaliser, fiable notamment du point de vue sécurité et confidentialité, donc sur le plan de l'identification, qui soit portable et adapté suivant le type d'appareil sur lequel il se raccorde, ne nécessitant ainsi pas de lecteur spécifique, et qui surtout puisse présenter une activité dynamique, permettant d'étendre les possibilités des dispositifs du type en question existant sur le marché.

La présente invention propose un dispositif autonome portable de stockage, de transfert et de contrôle d'informations destiné éventuellement à se raccorder à un appareil apte à effectuer une "lecture" des informations contenues et/ou transitant par ledit dispositif, du type comprenant un support apte à recevoir des composants électroniques, intégrant :

. une mémoire morte de type ROM,

. un microprocesseur apte à gérer le fonctionnement du dispositif, ainsi que des mémoires dont la ROM;

. un moyen de connexion du support avec un terminal;

. une source d'énergie éléctrique .

Elle **se caractérise** :

- en ce que la dite source d'énergie électrique est intégrée sur le support,

- et en ce qu'il comprend en outre :

. une horloge du type à quartz, activée par la dite source électrique, et destinée outre à fournir des données horaires, à horodater les différentes informations transitant par le dispositif ;

. une mémoire vive de type RAM, alimentée par ladite source d'énergie électrique,

. un interface destiné à permettre le transit des informations entre le microprocesseur et les moyens de connexion ;

- et en ce que le circuit électronique formé par le microprocesseur , les mémoires et l'interface est du type monolitique intégré.

En d'autres termes, l'invention se caractérise en ce que l'on munisse un dispositif portable d'une alimentation énergétique, en l'occurence électrique, afin de permettre l'utilisation de composants, qui jusqu'alors se trouvaient sur le lecteur, conférant ainsi au présent dispositif des possibilités d'utilisation non concevables avec les dispositifs connus.

Avantageusement, en pratique :

- le moyen de connexion sont constitués d'une pluralité de connecteurs, de forme complémentaire à celle du moyen de connexion de l'appareil sur lequel le dispositif se connecte ;
- le dispositif comporte un écran de visualisation, notamment du type à cristaux liquides, destiné à contrôler les informations concernant l'état du dispositif ;
- le dispositif comprend un clavier, destiné à l'introduction de données ;
- le dispositif comporte des fonctions annexes appartenant au groupe constitué par une calculette, un répertoire.. ;
- le dispositif comporte un système sonore, permettant de communiquer par voie acoustique ; il comporte également un microphone destiné à recueillir également des signaux acoustiques ;
- le dispositif comprend un récepteur radio lui permettant de recevoir des informations par voie Hertzienne ;
- le dispositif comprend également un organe émetteur et/ou récepteur de signaux optiques, notamment destiné à assurer une identification visuelle ;
- le dispositif se présente sous la forme d'un boitier de dimensions de poche.

La manière dont l'invention peut être réalisée et les avantages qui en découlent ressortiront mieux de l'exemple de réalisation qui suit, donné à titre indicatif et non limitatif, à l'appui des figures annexées.

La figure 1 est une représentation schématique du circuit électronique mettant en oeuvre les différents éléments du dispositif, conforme à l'invention.

La figure 2 est une représentation schématique montrant l'agencement des différentes structures au sein du dispositif conforme à l'invention.

Si dans la suite de la description, on décrit une forme de réalisation plus particulièrement adaptée à un centre serveur videotex type MINITEL (marque déposée par la Direction Générale des Télécommunications), il va de soi que la présente invention est adaptée à tout terminal d'un centre serveur, présentant une prise de connexion, susceptible de permettre un échange, un transfert d'informations avec le dispositif revendiqué.

Fondamentalement, le dispositif se présente sous la forme d'un boitier, format de poche, en matière plastique surmoulée, éventuellement muni d'un anneau fixé à l'une de ses extrémités, afin de rendre sa préhension, voire son stockage plus aisés, notamment en le fixant par exemple à un porte-clef. Il présente à son autre extrémi2té une prise de connexion (10) de type mâle. Il n'est pas démontable et porte un numéro de série indélébile.

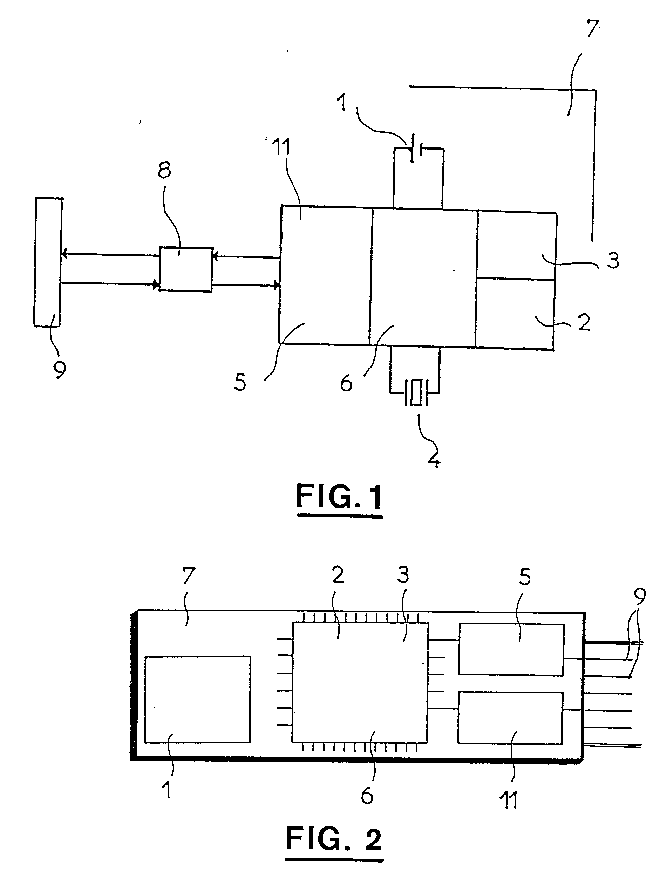

Comme on peut le voir sur la figure 1, il est constitué d'un support (7) sur lequel sont gravées des connexions électriques.Un microprocesseur masqué (6) intégrant différentes fonctions, parmi lesquelles une mémoire RAM (2), une mémoire ROM (3), ainsi qu'une horloge à quartz, est enfiché sur ce circuit. Le microprocesseur (6) est lui-même relié à une interface d'entrée (5) et une interface de sortie (11), dont le rôle principal est la conversion des signaux analogiques provenant du centre serveur en signaux numériques, en vue de leur traitement par le microprocesseur, et vice versa. L'ensemble dispose d'une source d'alimentation interne non remplaçable, sous forme de piles (1) telles que des piles au lithium. La durée de vie de cette source est au maximum égale à 18 mois.

Selon une caractéristique de l'invention, le dispositif comporte une mémoire vive de type RAM (2), alimentée électriquement au moyen des piles mentionnées précédemment. La mémoire RAM (2) est destinée à stocker tous les éléments dynamiques du présent dispositif, c'est-à-dire les clefs d'accès des paramètres et fonctions de cryptage et de décryptage des données et/ou de programmes, des crédits d'utilisation de services, des fonctions d'horodatages,...

La mémoire RAM (2) est directement reliée au microprocesseur, ou elle peut être intégrée au sein dudit microprocesseur (6). Il est à noter que toute tentative de démontage du dispositif provoque ipso facto une coupure d'alimentation,et par la même une remise à zéro de la mémoire. Il n'y a donc aucun moyen qui permette de dévoiler les codes et autres données contenues dans la mémoire RAM.

Lorsqu'une utilisation spécifique et bien déterminée du dispositif conforme à l'invention pour un seul type d'application est souhaitée, le paramétrage initial de la mémoire RAM (2) peut être couplé avec un dispositif de type fusible ou PROM, permettant de n'autoriser ce paramétrage qu'une seule fois. On dispose ainsi d'une sécurité accrue interdisant toute forme de "re-paramétrage". Ce verrouillage effectué lors de la fabrication peut être total ou partiel en fonction des choix des utilisateurs.

Dans une forme de réalisation avantageuse, l'adaptation du connecteur (9), éventuellement de l'adaptateur (8) et des interfaces (5,11) du circuit électronique à l'appareil sur lequel le dispositif doit se connecter, évite l'utilisation d'un lecteur.

Le programme présent dans la mémoire ROM (3) est constitué de telle façon qu'après mise sous tension, celui-ci ne démarre réellement qu'après introduction d'un code de déblocage, inscrit également dans la mémoire ROM, suivi des paramètres d'initialisation.

Comme déjà dit, Le microprocesseur comprend également une horloge à quartz (4). Cette dernière est activée par les piles (1). Elle est destinée à permettre un horodatage pour toutes les informations transitant par le microprocesseur (6), garantissant ainsi les opérations effectuées.

Il est à noter, et c'est également l'une des caractéristiques importantes de la présente invention, que le microprocesseur (6), les interfaces (5,11), la mémoire ROM (3) et la mémoire RAM (2) sont intégrés au sein d'un même circuit électronique monolithique (12), augmentant de ce fait l'inviolabilité du contenu des mémoires.

Dans une version plus évoluée de la présente invention, le dispositif comporte un écran de visualisation, notamment à cristaux liquides, ainsi qu'un clavier d'introduction de données, permettant d'augmenter l'interactivité du dispositif propement dit.

Dans une autre version, le dispositif comporte un système sonore permettant de communiquer par voie acoustique, le dit système sonore comprenant en outre un microphone destiné à permettre la reception de signaux acoustiques.

Dans le même ordre d'idée, il comprend également un récepteur radio, lui permettant de recevoir des informations, voire un paramétrage par voie hertzienne.

Dans une autre version, le dispositif conforme à l'invention peut émettre et recevoir des signaux optiques, par l'intermédiaire d'un organe émetteur et récepteur de tels signaux, et ce en vue d'une identification visuelle.

La principale application du dispositif conforme à l'invention est la mise en relation d'un usager dudit dispositif et d'un centre serveur, afin d'échanger des informations confidentielles et de permettre d'offrir des solutions adaptées aux besoins du simple usager, voire des entreprises, à savoir, notamment, des applications de paiement, de sécurité d'accès logique et physique.

La mise en relation d'un usager et d'un serveur peut s'effectuer par le biais de la connexion automatique mise en oeuvre à l'échelon local par le dispositif conforme à l'invention. Cette fonctionnalité permet d'assurer la numérotation, puis la connexion avec un serveur.

Outre la protection que l'usager est en droit d'attendre quant aux tentatives d'utilisation frauduleuse de son dispositif, en cas de perte, ou de vol par exemple, l'intégrité des transactions effectuées par le biais du réseau télématique doit également être assurée. Pour ce faire, le dispositif conforme à l'invention comprend trois fonctions essentielles mises en oeuvre successivement :
- l'authentification, au cours de laquelle le centre serveur vérifie la validité du dispositif utilisé ; cette phase se décompose en fait de deux étapes respectives . D'une part, une phase d'identification à l'échelon local, dans laquelle, à la demande du serveur l'utilisateur entre son code confidentiel, contrôlé par le dispositif . Trois erreurs successives bloquent le dispositif pour une durée fixée à l'origine par le constructeur.Trois séquences de trois erreurs entrainent la destruction de la mémoire de données. D'autre part,une phase d'identification par le serveur. Ce dernier est averti de façon sûre et inimitable du résultat correct de la saisie du code confidentiel par certification de la réponse du dispositif ;
- la certification, qui donne à une centre serveur la preuve de la présence d'une information dans le dispositif. Pour ce faire, le microprocesseur du dispositif exécute un algorithme de sécurité fournissant un résultat à partir d'un message reçu du serveur, notamment sous la forme d'un nombre aléatoire. d'une clef secrète du dispositif et de données de la mémoire ROM ;
- la signature : pour se prémunir contre la malveillance d'un tiers qui voudrait modifier le contenu d'un message émis de A vers B, les textes envoyés par A sont accompagnés d'une signature électronique garantissant à B l'intégrité du message reçu. La demande de signature doit être accompagnée d'une procédure d'authentification analogue à celle décrite ci-dessus. Le dispositif calcule une signature sur un compressé de texte fourni par le serveur en utilisant sa clef de signature. Cette signature garantit que le porteur du dispositif a donné son accord pour le déroulement d'une procédure proposée par le serveur. Il est à la charge de ce dernier de garantir l'association du compressé et de la procédure. Le calcul effectué par le dispositif est équivalent à une signature si le serveur ne possède pas la clef de signature ; dans ce cas, le serveur ne peut produire de fausse signature. De fait, le compressé est chiffré en utilisant la clef d'authentification, dechiffré par le dispositif, signé avec la clef de signature dudit dispositif, et rechiffré en utilisant la clef d'authentification avant transmission. Dans ces conditions, l'authentification et la protection de la signature utilisent une clef différente de celle utilisée pour calculer la signature.

Le dispositif étant alimenté par piles, il n'y a pas lieu de le mettre sous tension, et le seul fait de l'insérer dans la prise péri-informatique d'un terminal, tel que par exemple celle d'un MINITEL, le rend opérationnel. Toutefois, afin de réduire l'usure de piles, le dispositif est en mode sommeil lorsqu il ne détecte aucune activité sur la prise. Tout caractère transitant par la prise provoque le réveil du dispositif. Celui-ci analyse le caractère reçu, et s'il s'agit d'une commande reconnue, l'éxécute. Dans le cas contraire, il considère qu'il s'agit d'un réveil intempestif et commande au terminal un blocage de la prise, ce qui permet d'éviter une usure de la pile trop rapide dans les cas suivants :
- connexion avec un serveur n'utilisant pas le terminal ;
- utilisation d'un terminal non connecté.

Il est à la charge du serveur de commander le déblocage de la prise avant toute utilisation du dispositif.

Il va être décrit plus en détail les phases de fonctionnement du dispositif avec le centre serveur. La mise en oeuvre d'une application du dispositif nécessite l'établissement de la connexion, au travers du réseau téléphonique ou télématique, du terminal sur un serveur. La première étape constitue l'établissement de la session avec le dispositif. Le serveur adresse au dispositif une demande d'ouverture de session. Cette demande comporte obligatoirement une commande d'établissement d'aiguillage d'un système de modulation-démodulation associé, tel que l'adaptateur (8), ou éventuellement (MINITEL) intégré dans le terminal vers la prise peri-informatique, car le dispositif a pu bloquer la prise (voir paragraphe précédent). Il attend alors une réponse à sa demande de connexion logique pour débuter le dialogue avec le dispositif. Ce dialogue s'effectue à l'aide de consignes, c'est à dire de commandes destinées par exemple à initialiser des paramètres du dispositif ou à éxécuter des fonctions internes.

La première commande transmise au dispositif est une consigne de mise en mode identique à celle d'un lecteur de cartes mémoires. La réponse à la consigne de mise en mode permet au serveur de savoir qu'il a affaire à un dispositif du type en question, et comporte des informations décrivant l'état de ce dernier. Le serveur peut alors soit vérifier la validité du dispositif, soit le télécharger d'abord et commencer ensuite la phase applicative.

La phase suivante constitue le téléchargement de paramètres. Lors de la première connexion avec un dispositif conforme à l'invention, le serveur initie un dialogue particulier qui permet de personnaliser ledit dispositif en fonction de son numéro de série et de son application, et de le rendre unique. Ce dialogue est authentifié et certifié par les clefs de transport présentes dans le dispositif et caractéristiques du lot auquel il appartient.

La phase ultime constitue la fermeture de la session. Elle peut être provoquée de différentes manières :
- par le dispositif, après échec du dialogue avec le serveur ;
- par le serveur après échec du dialogue avec le dispositif ;
- par une fin normale, décidée par le serveur, qui envoie une commande de déconnexion ;
- par une déconnexion du terminal ;
- par le point d'accès qui envoie une demande de déconnexion ;
- par la modification abusive des aiguillages du terminal de la part du serveur, en cours de saisie/contrôle de code confidentiel.

De la description qui précède, il ressort que le dispositif conforme à l'invention dispose d'un système d'exploitation chargé d'interpréter et d'exécuter les commandes appelées consignes, que lui transmet un serveur, dans le but d'établir un dialogue sécurisé entre un usager et une application déterminée. De la sorte, il est doté d'une part de trois modules communiquant entre eux, respectivement un "module réveil", surveillant l'activité sur la prise péri-informatique d'un terminal et décidant du réveil ou de la mise en sommeil du dispositif, un module "application" chargé d'analyser les consignes, de les exécuter puis de renvoyer un compte-rendu, et un module "télécommunications" chargé de gérer l'interface du dispositif avec le monde extérieur, et d'autre part d'un module autonome de "prépersonnalisation", actif lors de la première initialisation dudit dispositif, chargé d'acquérir les paramètres caractéristiques du lot.

Le module autonome dit de "prépersonnalisation" remplit trois fonctions essentielles, à savoir :
- l'initialisation du dispositif; cette fonction est activée lors de la mise en place des piles avant le surmoulage du dispositif. Cette fonction procède à la remise à zéro de la mémoire de données ROM, la mise en route des différentes horloges internes, l'autotest du dispositif et passe le contrôle au module d'acquisition ;
- l'acquisition des données à précharger et leur contrôle ;
- la validation des données chargées et transfert du contrôle aux modules définis ci-dessus ; cette fonction termine le processus de "prépersonnalisation" en enregistrant définitivement les valeurs chargées dans la mémoire de données. Il est alors impossible dans la suite de réutiliser ce module. Le contrôle est alors passé aux modules télécommunications et application et le module prépersonnalisation est désactivé.

Dans le cadre de l'application du dispositif au MINITEL, il est destiné à se raccorder sur le connecteur DIN péri-minitel d'un Minitel du type distribué par les Postes et Télecommunications. Le connecteur du dispositif présente donc des connexions adaptées en forme et en nombre. Il est donc possible pour le dispositif de saisir les informations transitant entre le MINITEL et un centre serveur quelconque, voire même de détourner ces informations pour les faire transiter par le dispositif lui-même. De même, le dispositif conforme à l'invention est à même de répondre à des sollicitations du serveur. Ainsi, l'utilisation directe du connecteur DIN du Minitel évite l'utilisation d'un dispositif spécial de lecteur et/ou d'écriture. En effet, le transfert des informations se fait en série de manière bi-directionnelle simultanée.

Il ressort de la présente invention un grand nombre d'avantages, que les systèmes connus jusqu'alors ne permettaient pas d'obtenir, parmi lesquels :
- les avantages inhérents au fait que le dispositif est sous alimentation électrique permanente. Ainsi, cette disposition augmente de manière importante la sécurité du dispositif, du fait que l'on peut alors utiliser des systèmes de protection dynamiques, aussi bien pour la mémorisation que pour le transfert d'informations. En effet, la présence d'une horloge intégrée dans le dispositif permet la modification régulière et automatique de certaines variables. Cette modification temporelle des caractéristiques de l'objet permet entre autre la mise en oeuvre de systèmes de sécurité très performants. De plus, le fait qu'il soit alimenté de manière permanente permet de stocker en mémoire vive RAM certaines clefs permettant son fonctionnement. En effet, toute tentative de démontage du dispositif entraîne une autodestruction de ces éléments, notamment du contenu de la mémoire vive RAM.

De plus, en cas d'erreur dans l'introduction du code confidentiel, le système ne se bloque pas au bout d'un petit nombre d'essai, comme pour les systèmes connus, mais on peut temporiser chaque accès d'une durée variable, croissant avec le nombre d'erreurs ;
- un faible prix et une simplicité de fabrication et d'utilisation du fait de l'emploi de matériaux traditionnels ;
- un dispositif autonome et réellement portable ;
- de nombreuses possibilités complémentaires.

Ce dispositif présente de ce fait un grand nombre d'applications parmi lesquelles :
- la sécurité d'accès à certaines banques de données du minitel ;
- le pré-paiement de certains services, sur minitel;
- l'achat par minitel ou téléphone grâce à l'identification et/ou le paiement automatique ou pré-paiement, etc...

En-dehors du Minitel (donné comme exemple), le dispositif peut être connecté sur de nombreux autres appareils pour remplir les fonctions décrites ci-dessus ou des fonctions complémentaires : en effet, le dispositif conforme à l'invention peut être connecté à un téléviseur, au compteur d'électricité, au décodeur chaîne TV à payage, au décodeur satellite, aux jeux électroniques, aux serrures de portes d'accès..

De ce fait, le dispositif conforme à l'invention, de par sa structure électronique, reste actif sans être connecté. De plus, il permet de réaliser l'auto-destruction de la mémoire vive (RAM) augmentant ainsi ses propriétés de cryptage et d'authentification.

## Revendications

1/ Dispositif autonome portable de stockage, de transfert et de contrôle d'informations, destiné éventuellement à se raccorder à un appareil apte à effectuer une "lecture" des informations contenues et/ou transitant par ledit dispositif, du type comprenant un support (7) apte à recevoir des composants électroniques, intégrant :
. une mémoire morte de type ROM (3),
. un microprocesseur (6) apte à gérer le fonctionnement du dispositif, ainsi que des mémoires dont la ROM (3) ;
. des moyens de connexion (9) du support sur un terminal ;
. une source d'énergie électrique (1) ;
**caractérisé** :
- en ce que la dite source d'énergie électrique (1) est intégrée sur le support (7),
- en ce que le dispositif comporte en outre :
. une horloge du type à quartz (5), activée par ladite source électrique, et destinée outre à fournir des données horaires, à horodater les différentes informations transitant par le microprocesseur (6) ;
. une mémoire vive de type RAM (2), alimentée par ladite source d'énergie électrique (1);
. des interfaces (5,11) destiné à permettre le transit des informations entre le microprocesseur (6) et les moyens de connexion (9) ;
- et en ce que le circuit électronique formé par le microprocesseur (6), les mémoires (2,3) et les interfaces (5,11) est du type monolithique intégré.

2/ Dispositif autonome selon la revendication 1, caractérisé en ce que les moyens de connexion (9) sont constitués d'une pluralité de connecteurs, de forme complémentaires à celle du moyen de connexion de l'appareil sur lequel il se connecte.

3/ Dispositif selon l'une des revendications 1 et 2, caractérisé en ce qu'il comporte un écran de visualisation, notamment du type à cristaux liquides, destiné à contrôler les informations concernant l'état du dispositif.

4/ Dispositif selon l'une des revendications 1 à 3, caractérisé en ce qu'il comprend un clavier, destiné à l'introduction de données.

5/ Dispositif selon l'une des revendications 1 à 4, caractérisé en ce qu'il comporte des fonctions annexes appartenant au groupe constitué par une calculette, un répertoire.

6/ Dispositif selon l'une des revendications 1 à 5, caractérisé en ce qu'il comporte un système sonore, permettant de communiquer par voie acoustique et en ce qu'il comporte également un microphone destiné à recueillir également des signaux acoustiques.

7/ Dispositif selon l'une des revendications 1 à 6, caractérisé en ce qu'il comprend un récepteur radio lui permettant de recevoir des informations par voie Hertzienne.

8/ Dispositif selon l'une des revendications 1 à 7, caractérisé en ce qu'il comprend également un organe émetteur et/ou récepteur de signaux optiques, notamment destiné à assurer une identification visuelle .

9/ Dispositif selon l'une des revendications 1 à 8, caractérisé en ce qu'il se présente sous la forme d'un boitier de dimensions de poche.

**FIG. 1**

**FIG. 2**